# EUROPEAN PATENT APPLICATION

(11) **EP 2 725 445 A1**
(43) Date of publication of application: **30.04.2014**
(21) Application number: 12802194.6
(22) Date of filing: 21.05.2012
(51) Int. Cl.: G05D 23/20, A47G 9/06

(54) **ELECTRIC BLANKET AND LOW-VOLTAGE THERMOSTATIC CONTROL DEVICE THEREOF**

(30) Priority: 22.06.2011 CN 201110169361; 22.06.2011 CN 201120212328 U
(71) Applicant: Shenzhen Xishuo Technology Company Limited, Shenzhen, Guangdong 518000 (CN); Hu, Shaobang, Shenzhen, Guangdong 518000 (CN)
(72) Inventor: HU, Shaobang, Shenzhen Guangdong 518000 (CN)
(74) Representative: Gjervaldsaeter, Peder
(86) International application number: PCT/CN2012/075839
(87) International publication number: WO 2012/174966

(57) **Abstract**

The present invention relates to temperature control field, and particularly to an electric blanket and a low voltage and constant temperature controlling device thereof. In the present invention, because the high voltage rectifying and filtering unit power, the changing unit, the working parameter setting unit, and the temperature controlling unit are provided in the low voltage and constant temperature controlling device, the electric element can be heated by the low voltage DC, and the low voltage and constant temperature controlling device can automatically adjust the output voltage of the power converting unit according to the presetting work parameters of the user and the temperature of the electric element and can make the temperature of the electric element rapidly reach to the presetting temperature value and keep constant, further the low voltage and constant temperature controlling device has multiple safety protection function and simple circuit structure, thereby solving the problems of low temperature constancy, high cost, low safety, and electromagnetic radiation existing in the known technology.

## Description

### TECHNICAL FIELD

The present invention relates to temperature control field, and particularly to an electric blanket and a low voltage and constant temperature controlling device thereof.

### BACKGROUND

In a cold winter, an electric blanket are widely used as a heating tool. Generally, a control circuit of the traditional electric blanket heats the electric heating wires by directly utilizing the high voltage alternating current (AC). The body of the user should closely contact the electric blanket while the electric blanket is used, thus causes a potential safety hazard. Further heating the electric heating wires by utilizing the high voltage alternating current will generate electromagnetic radiation, and the electromagnetic radiation is harmful to the body of the user.

Aiming to the above described disadvantage of the electric blanket heating by the high voltage AC, a known technology provides a low voltage supplying device to convert the high voltage AC to the low voltage direct current (DC) to heat the electric heating wires, and provides a control circuit to control the temperature by turning off a switch tube to stop heating when the temperature is higher than an upper limit of the temperature and turning on the switch to start to heat when the temperature is lower than a lower limit of the temperature. Because the switch tube is the key element, the electric blanket always keeps heating when the switch tube is short-circuited, thereby, it is easy to cause fire. Therefore, this temperature controlling way also exist potential safety hazard. In addition, the known heating way with constant temperature cannot continuously output a voltage to keep the electric heating wires on a constant temperature, thereby the temperature of the electric heating wires will fluctuate. Therefore, the known heating way has low temperature constancy. Further, the circuit structure of the known heating way is complex and has higher cost. Therefore, the known heating way has the problems of lower temperature constancy, higher cost, and lower safety.

### SUMMARY

The object of the present invention provides a low voltage and constant temperature controlling device of an electric blanket for solving the problems of lower temperature constancy, higher cost, and lower safety of known technology.

The present invention is realized by the below solution. The low voltage and constant temperature controlling device of an electric blanket is connected to an external AC power source and an electric heating element. The low voltage and constant temperature controlling device includes a high voltage rectifying and filtering unit, a power converting unit, a working parameter setting unit, and a temperature controlling unit.

An AC voltage input end of the high voltage rectifying and filtering unit being connected to the external AC power source and configured for rectifying and filtering high voltage AC of the AC power source and outputting high voltage direct current.

A positive voltage input end and negative voltage input end of the power converting unit are respectively connected to the positive voltage output end and negative voltage output end of the high voltage rectifying and filtering unit. The positive voltage output end and negative voltage output end of the high voltage rectifying and filtering unit respectively connecting with a first end and a second end of the electric element, an control signal input end being connected to a controlling signal outputting end of the temperature controlling unit and configured for converting the high voltage DC to the low voltage DC whose voltage changing with the controlling signal according to the controlling signal outputted from the temperature controlling unit, thereby providing working voltage for the electric element.

An output end of the working parameter setting unit is connected to a controlling end of the temperature controlling unit configured for outputting setting signal for setting working parameters for the temperature controlling unit.

A temperature sensing signal input end of the temperature controlling unit is connected to a third end of the electric heating element. The controlling end of the temperature controlling unit is connected to the output end of working parameter setting unit and configured for generating controlling signals according to a temperature sensing signal outputted from the electric element and the setting signal outputted from the working parameter setting unit.

The low voltage and constant temperature controlling device further includes a voltage limiting unit. An input end and output end of the voltage limiting unit are respectively connected to a positive voltage output end and a controlling signal input end of the power converting unit and configured for limiting a voltage value of the low voltage DC outputted from the power converting unit within a safe voltage range.

Another object of the present invention is for providing a blanket including the low voltage and constant temperature controlling device.

In the present invention, the high voltage rectifying and filtering unit power, the changing unit, because the working parameter setting unit, and the temperature controlling unit are provided in the low voltage and constant temperature controlling device, the electric element can be heated by the low voltage DC, and the low voltage and constant temperature controlling device can automatically adjust the output voltage of the power converting unit according to the presetting work parameters of the user and the temperature of the electric element and can make the temperature of the electric element rapidly reach to the presetting temperature value and keep constant, further the low voltage and constant temperature controlling device has multiple safety protection function and simple circuit structure, thereby solving the problems of low temperature constancy, high cost, low safety, and electromagnetic radiation existing in the known technology.

### BRIEF DESCRIPTION OF THE DRAWINGS

FIG. 1 shows a module structure diagram of a low voltage and constant temperature controlling device of an electric blanket in accordance with an embodiment of the present invention.
FIG. 2 shows a circuit structure diagram of a low voltage and constant temperature controlling device of an electric blanket in accordance with another embodiment.
FIG. 3 shows a circuit structure diagram of a low voltage and constant temperature controlling device of an electric blanket in accordance with another embodiment.

### DETAILED DESCRIPTION OF THE PREFERRED EMBODIMENTS

In order to clearly describe the technical solutions of the embodiments of the present invention, the accompany drawings used in the embodiments will be simply described below. It is should be understood, the embodiments described here intends to explain the present invention, and do not intend to limit the present invention.

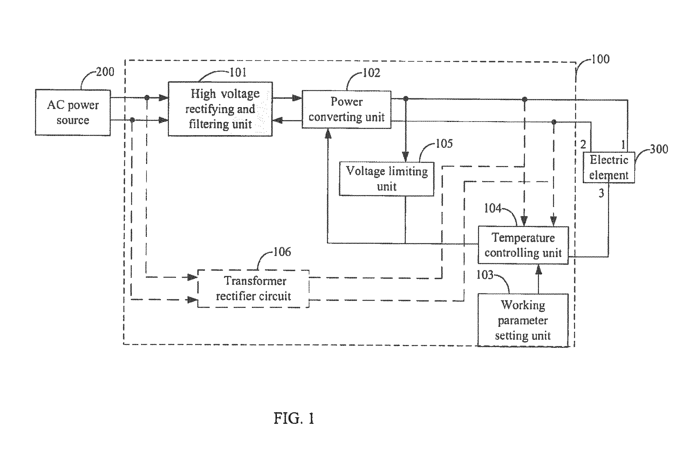

FIG. 1 shows a module structure diagram of a low voltage and constant temperature controlling device of an electric blanket in accordance with an embodiment of the present invention. For describing conveniently, only these parts related to the embodiment of the present invention are shown.

A low voltage and constant temperature controlling device 100 is connected to an external AC power source 200 and an electric element 300. The low voltage and constant temperature controlling device 100 includes:

A high voltage rectifying and filtering unit 101, a power converting unit 102, a working parameter setting unit 103, and a temperature controlling unit 104.

An AC voltage input end of the high voltage rectifying and filtering unit 101 connected to the AC power source 200 is configured for rectifying and filtering the high voltage AC of the AC power source 200 and outputting high voltage direct current.

A positive voltage input end and negative voltage input end of the power converting unit 102 are respectively connected to a positive voltage output end and negative voltage output end of the high voltage rectifying and filtering unit 101. The positive voltage output end and negative voltage output end of the high voltage rectifying and filtering unit 101 are respectively connected to a first end 1 and second end 2 of the electric element 300. A control signal input end of the high voltage rectifying and filtering unit 101 is connected to a controlling signal outputting end of the temperature controlling unit 104 and configured for converting the high voltage DC to the low voltage DC whose voltage changing with the controlling signal according to the controlling signal outputted from the temperature controlling unit 104, thereby providing working voltage for the electric element 300.

An output end of the working parameter setting unit 103 is connected to a controlling end of the temperature controlling unit 104 and configured for outputting setting signals for setting working parameters for the temperature controlling unit 104.

A temperature sensing signal input end of the temperature controlling unit 104 is connected to a third end 3 of the electric heating element 300. A controlling end of the temperature controlling unit 104 is connected to the output end of working parameter setting unit 103 and configured for generating controlling signals according to the temperature sensing signals outputted from the electric element 300 and the setting signals outputted from the working parameter setting unit 103.

In the embodiment of the present application, the temperature controlling unit 104 further includes a positive power source end and a negative power source end. As the connection relationship of the dashed lines shown in Fig.1, the positive power source end and a negative power source end are respectively connected to a positive voltage output end and a negative voltage output end of the power converting unit 102, and also can be connected to a positive voltage output end and a negative voltage output end of a transformer rectifier circuit 106. An AC voltage input end of the transformer rectifier circuit 106 is connected to the external AC power source 200 and is configured for converting the high voltage AC outputted from the AC power source 200 to the low voltage DC. When the transformer rectifier circuit 106 is required to use, the low voltage and constant temperature controlling device 100 includes the transformer rectifier circuit 106 (as the dashed line frame shown in Fig. 1).

The low voltage and constant temperature controlling device further includes a voltage limiting unit 105. An input end and output end of the voltage limiting unit 105 are respectively connected to a positive voltage output end and a controlling signal input end of the voltage changing unit 102, and configured for limiting a voltage value of the low voltage DC outputted from the power converting unit 102 within a safe voltage range.

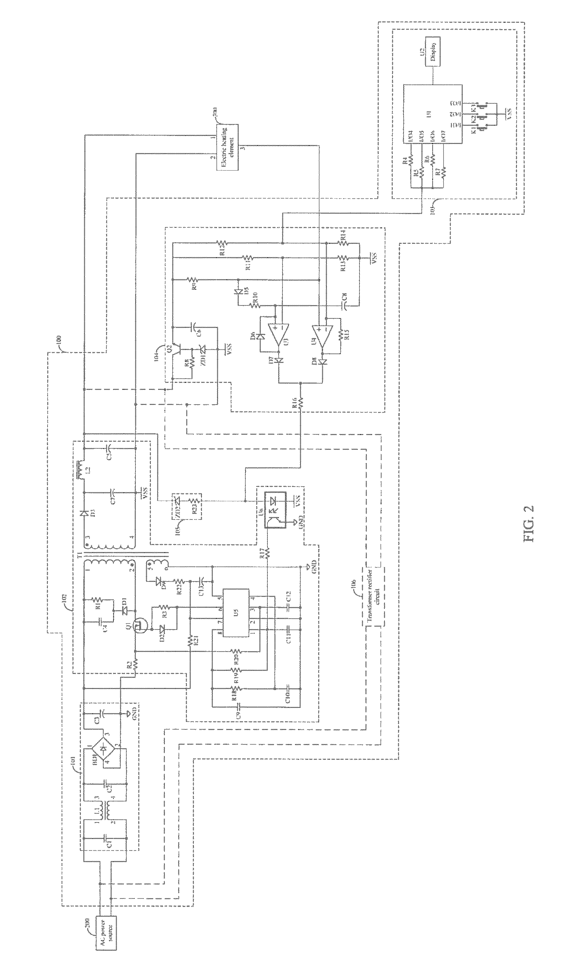

FIG. 2 shows a circuit structure diagram of a low voltage and constant temperature controlling device of an electric blanket in accordance with another embodiment. For describing conveniently, only these parts related to the embodiment of the present invention are shown.

As another embodiment of the present invention, the high voltage rectifying and filtering unit 101 includes: a capacitor C1, a choke coil L1, a capacitor C2, a rectifying bridge BD1 and a filtering capacitor C3.

A first end and second end of the capacitor C1 are AC voltage input end of the high voltage rectifying and filtering unit 101. A first input end and second input end of the choke coil L1 are respectively connected to the first end and second end of the capacitor C1. The capacitor C2 is connected to the first output end 3 and second output end 4 of choke coil L1. The first input end 1 and second input end 2 of the rectifying bridge BD1 are respectively connected to the first output end 3 and second output end 4 of the choke coil L1. The positive pole and negative pole of the filtering capacitor C3 respectively are the positive voltage output end and negative voltage output end of the high voltage rectifying and filtering unit 101 and are respectively connected to the positive voltage output end 3 and negative voltage output end 4 of the rectifying bridge BD1. The negative output end of the rectifying bridge BD1 is a high voltage power source ground GND. Wherein, the sub-circuit formed by the choke coil L1, the capacitor C1, and the capacitor C2 is mainly used to prevent the high-frequency disturbance signals in the high voltage rectifying and filtering unit 101 from flowing to the AC power source 200 to disturb other electrical devices, and also used to prevent the outside disturbance signals from entering into the high voltage rectifying and filtering unit 101.

As another embodiment of the present invention, the power converting unit 102 includes: a capacitor C4, a resistor R1, a diode D1, a resistor R2, a NMOS tube Q1, a diode D2, a resistor R3, a transformer T1, an optocoupler U6, a resistor R17, a resistor R18, a resistor R19, a resistor R20, a capacitor C9, a capacitor C10, a capacitor C11, a capacitor C12, a pulse modulator U5, a resistor R21, an electrolytic capacitor C13, a resistor R22, a diode D9, a diode D3, an electrolytic capacitor C7, an inductor L2, and an electrolytic capacitor C5.

A first end 1 of a primary coil of the transformer T1 is the positive voltage input end of the power converting unit 102. A first end of the capacitor C4 and the first end of the resistor R1 are connected together to the first end 1 of the primary coil of the transformer T1. A second end of the capacitor C4 and a second end of the resistor R2 are connected together to the cathode of the diode D1. The anode of the diode D1 and a second end 2 of the primary coil of the transformer T1 are connected together to a drain electrode of the NMOS tube Q1, a source electrode of NMOS tube Q1 is connected to the first end of the resistor R2, the second end of the resistor R2 is a positive voltage input end of the power converting unit 102. The grid electrode of the NMOS tube Q1 is connected to an anode of the diode D2. The resistor R3 is connected between the cathode and anode of the diode D2. The cathode of the diode D2 is connected to an output pin 6 of the pulse modulator U5. The resistor R18 is connected between a RT/CT pin 4 and a reference voltage output pin. The resistor R19 is connected between a compensating pin 1 and a reference voltage output pin of the pulse modulator U5. The resistor R20 is connected between the source electrode of the NMOS tube Q1 and current sampling pin 3 of the pulse modulator U5. A first end of the capacitor C9, a first end of the C10, a first end of the capacitor C10, and a first end of the capacitor C12 are respectively connected to a reference voltage output pin 8, a RT/CT pin 4, a compensating pin 1, and a current sampling pin 3 of the pulse modulator U5. A second end of the capacitor C9, a second end of the C10, a second end of the capacitor C11, and a second end of the capacitor C12 are connected together to the high voltage power source ground. A first end of the resistor R21 is connected to a positive voltage output end of the high voltage rectifying and filtering unit 101. A second end of the resistor R21 is connected to the power source pin 7 of pulse modulator U5, a first end of the resistor R22, and a positive pole of the electrolytic capacitor C13. A second end of the resistor R22 is connected to a cathode of the diode D9. An anode of the diode D9 is connected to a first end of a secondary coil of the transformer T1 and a second end of a secondary coil of the transformer T1. A ground pin of the pulse modulator U5 and cathode of the electrolytic capacitor C 12 are connected together to the high voltage power source ground. An anode of the diode D3 and a positive pole of the electrolytic capacitor are respectively connected to the first and second end of the secondary coil of the transformer T1. A cathode of the diode D3 and the negative pole of the electrolytic capacitor C7 are connected together to a first end of the inductor L2. The second end of the inductor L2 is the positive voltage output end of the power converting unit 102 and is connected to a positive pole of the electrolytic capacitor C5. The negative pole of the electrolytic capacitor C5 is the negative voltage output end of the power converting unit 102 and is connected to the negative pole of the electrolytic capacitor C7. The negative voltage output end of the power converting unit is a low voltage power source ground. An anode of a light-emitting diode in the optocoupler U6 is a controlling signal input end of the power converting unit 102. A cathode of a light-emitting diode in the optocoupler U6 is connected to the low voltage power source ground. A collector electrode of a light activated triode in the optocoupler U6 is connected to a first end of the resistor R17. A second end of the resistor R17 is connected to the compensating pin 1 of the pulse modulator U5. An emitter electrode of the light active triode in optocoupler U6 is connected to the high voltage power source ground GND. Wherein, the pulse modulator U5 is a UC3843 type of pulse-width modulated integrated circuit.

As another embodiment of the present invention, the working parameter setting unit 103 includes: a microcontroller U1, a first key K1, a second key K2, a third key K3, a resistor R4, a resistor R5, a resistor R6, a resistor R7, and a display U2.

A first universal input and output port I/O1, a second universal input and output port I/O2, and a third universal input and output port I/O3 of the microcontroller U1 are respectively connected to a first end of the first key K1, a first end of the second key K2, and a first end of the third key K3. A second end of the first key K1, a second end of the second key K2, and a second end of the third key K3 are connected together to the low voltage power source ground VSS. A first end of the resistor R4, a first end of the resistor R5, a first end of the resistor R6, and a first end of the resistor R7 are respectively connected to a fourth universal input and output port I/O4, a fifth universal input and output port I/O5, a sixth universal input and output port I/O6, and a seventh universal input and output port I/O7 of the microcontroller U1. A second end of the resistor R6 and a second end of the resistor R7 are connected together to form an output end of the working parameter setting unit 103. The display U2 connects with the microcontroller U1. The microcontroller U1 can be a single chip micro-computer or an ARM processor. The display U2 is used for displaying the parameter information set by the user, and can be a seven segments display, an LCD display, or an LED display. In practice, the number of the universal input and output ports of the microcontroller U1 is determined by the type of the display U2. The working parameters set by the work parameter setting unit 103 includes temperature values, turning on and off times, and the key for turning on/off the device in real time. The user can turn on and turn off the device in real-time by pressing the first key K1. The combination of the first key K1, the second key K2, and the third key K3 can be used to set the temperature value, turning on and off time, the setting way can be flexible configured according to actual applications.

As another embodiment of the present invention, the temperature controlling unit 104 includes: an NPN type triode Q2, a resistor R8, a zener diode ZD1, an electrolytic capacitor C6, a resistor R9, a diode D5, a resistor R10, a resistor R11, a resistor R12, a resistor R13, a resistor R14, an electrolytic capacitor C8, a diode D6, an operational amplifier U3, a diode D7, an operational amplifier U4, a diode D8, a resistor R15, and a resistor R16.

A collector electrode of the NPN type triode Q2 is the positive power source end of the temperature controlling unit 104. The resistor is connected between the collector electrode and a base electrode of the NPN type triode Q2. A cathode of the zener diode ZD1 is connected to the base electrode of the NPN type triode Q2. An anode of the zener diode ZD1 is the negative power source end of the temperature controlling unit 104 and is connected to the low voltage power source ground VSS. The positive pole and negative pole of the electrolytic capacitor C6 are respectively connected to an emitter electrode of the NPN type triode Q2 and the low voltage power source ground VSS. A first end of the resistor R9 is connected to the positive pole of the electrolytic capacitor C6. A positive pole of the diode D5 is connected to a second end of the resistor R9 and a noninverting input end of the operational amplifier U4. The noninverting input end of the operational amplifier U4 is the temperature sensing signal input end of the temperature controlling unit 104. A cathode of the diode D5 is connected to a first end of the resistor R10, a second end of the resistor R10 is connected to the noninverting input end of the operational amplifier U3 and a positive pole of the electrolytic capacitor C8. A negative pole of the electrolytic capacitor C8 is connected to the low voltage power source ground VSS. A first end of the resistor R 11 and a first end of the resistor R12 are connected together to the first end of the resistor R9. A second end of the resistor R 11 and a first end of the resistor R13 are connected together to an inverting input end of the operational amplifier U3. A second end of the resistor R12 is a controlling end of the temperature controlling unit 104 and is connected to the inverting input end of the operational amplifier U4. A first end of the resistor R14, a second end of the resistor R13 and a second end of the resistor R13 are connected together to the low voltage power source ground VSS. A cathode of the diode is connected to the noninverting input end of the operational amplifier U. An output end of the operational amplifier U3 and the anode of the diode D6 are connected together to an anode of the diode D7. The resistor R15 is connected between the inverting input end and output end of the operational amplifier U4. The anode of the diode D8 is connected to the output end of the operational amplifier U4. The cathode of the diode D7 and the cathode of the diode D8 are connected together to a first end of the resistor R16. A second end of the resistor R16 is a controlling signal outputting end of the temperature controlling unit 104.

As another embodiment of the present invention, the voltage limiting unit 105 includes a zener diode ZD2 and a resistor R23. A cathode of the zener diode ZD2 is an input end of the voltage limiting unit 105. An anode of the zener diode ZD2 is connected to a first end of the resistor R23. A second end of the resistor R23 is the output end of the voltage limiting unit 102.

The low voltage and constant temperature controlling device 100 of the electric blanket is described in detail in view of the operating principle.

The high voltage AC outputted from the AC power source 200 is inputted to the rectifying bridge BD1 through the choke coil L1 to rectify. After being filtered by a filtering capacitor C3, the rectified high voltage AC is converted to high voltage DC, thereby the high voltage rectifying and filtering is completed.

The positive voltage of the high voltage DC is inputted to the first end 1 of the primary coil of the transformer T1. The negative voltage of the high voltage DC is inputted to the source electrode of the NMOS tube Q1 through the resistor R2. The pulse signals outputted from the output pin 6 of the pulse modulator U5 drives the NMOS tube Q1 to do the turning on/off operation through the diode D2 and NMOS tube Q1. The current in the primary coil of the transformer T1 connected with the drain electrode of the NMOS tube Q1 is changed with the turning on/off of the NMOS tube Q1. The changed current is outputted through the induction of the secondary coil of the transformer T1. The induction current outputted from the secondary coil is rectified and filtered through the diode D3 and capacitor C5 to low voltage DC which provides working voltage for the electric element 300 to drive the electric element 300 to heat. When the control signal outputted from the compensate pin 1 of the pulse modulator U5 is changed, the pulse duty cycle of the pulse signal outputted from the output pin 6 of the pulse modulator U5 is changed accordingly, thereby the pulse duty cycle of the switch of the NMOS tube Q1 is changed too. Due to the change of the pulse duty cycle of the switch of the NMOS tube Q1, the induction current of the secondary coil of the transformer T1 is also changed, thereby the heating power of the electric element 300 is changed accordingly. The capacitor C4 and resistors R1 and D1 form a clamping circuit for constraining the generation of the peak voltage in a instant when the switch tube Q1 is turned off. The resistor R20 is a current sampling resistor, based on the current feedback from the resistor R20, the NMOS tube Q1 can be protected from over current. The optocoupler U6 is configured for transmitting the control signal insulatedly.

The NPN type triode Q2, resistor R8, zener diode ZD1, and electrolytic capacitor C6 form a DC zender circuit for stabilizing voltage of the low voltage DC from the external input to provide working voltage for the temperature controlling unit 104. The operational amplifier U4, resistor R9, resistor R12, resistor R14, and resistor R15 form a signal amplifying circuit. The voltage signal of the inverting input end of the operational amplifier U4 coming from the working parameter setting unit 103 is configured for representing the user parameter setting signal. The voltage signal of the noninverting input end of the operational amplifier U4 coming from the electric element 300 is configured for representing temperature sensing signal of the electric element 300. The operational amplifier U4 compares and amplifies the user parameter setting signal of the inverting input end and the temperature sensing signal of the noninverting input end to output control signal. The control signal is transmitted to the power converting unit 102 through the diode D8 and resistor R16 to adjust the output voltage. When the temperature of the electric element 300 is higher than a presetting value of the user, the temperature controlling unit 104 outputs a control signal to control the power converting unit 102 to reduce the voltage output to reduce thereby the heating power of the electric element 300 until the temperature is equal to the presetting value of the user. When the temperature of the electric element 300 is lower than the presetting value of the user, the temperature controlling unit 104 outputs a control signal to control the power converting unit 102 to increase the voltage output to increase thereby the heating power of the electric element 300 until the temperature is equal to the presetting value of the user. Thus the constant temperature effect of the blanket can be realized. The operational amplifier U3, resistor R9, resistor R10, resistor R11, resistor R13, diode D6, diode D5, and electrolytic capacitor C8 form a safety protection circuit. The voltage signal of the noninverting input end of the operational amplifier U3 comes from the electric element 300. The resistor R11 and the resistor R13 are connected in series for dividing voltage and providing reference voltage to the inverting input end of the operational amplifier U3. When the temperature of the electric element 300 is higher than a highest temperature setting value or the electric element is short-circuited, the voltage of the noninverting input end of the operational amplifier U3 will be larger than the voltage of inverting input end of the operational amplifier U3 and the operational amplifier will output a high level. The high level being taken as a control signal is transmitted to the power converting unit 102 through the diode D7 and resistor R16 to close the voltage output, thereby the electric element 300 stop heating and the safety protection function is realized. The diode D6 is for locking the output of the operational amplifier U3.

The work parameters set by the work parameter setting unit 103 includes temperature value, turning on and off time, and key for turning on/off the device. The user can turn on and turn off the device in real-time by pressing a first key K1. The combination of the first key K1, a second key K2, and a third key K3 can be used to set the temperature value, turning on and off time, the setting method can be chosen according to the actual situation. When the first key K1 is pressed to turn on/off the device, the fourth universal input and output port I/O4, the fifth universal input and output port I/O5, the sixth universal input and output port I/O6, and the seventh universal input and output port I/O7 of the microcontroller U1 outputs a voltage signal corresponding to the turning on/off operation to control the temperature controlling unit 104 to turn on or turn off the low voltage and constant temperature controlling device 100. After the temperature value is set by the user, the microcontroller U1 outputs voltage signals corresponding to the set temperature value through the fourth universal input and output port I/O4, the fifth universal input and output port I/O5, the sixth universal input and output port I/O6, and the seventh universal input and output port I/O7 to the temperature controlling unit 104. The outputted voltage is taken as a constant temperature reference voltage. After the turning on and off time is set, when the working time of the low voltage and constant temperature controlling device 100 is reach to the preset turning off time, the fourth universal input and output port I/O4, the fifth universal input and output port I/O5, the sixth universal input and output port I/O6, and the seventh universal input and output port I/O7 of the microcontroller U1 outputs an off voltage signal to drive the temperature controlling unit 104 to turn off the low voltage and constant temperature controlling device 100. The display U2 is configured for displaying a setting status for setting the work parameters and work status of the circuit.

When the outputted voltage of the power converting unit 102 is greater than a safety voltage value, the zener diode ZD2 is broken down and thereby conducted, the current flows through the zener diode ZD2 and the resistor R23 to input to the controlling signal input end of the power converting unit 102 to control the power converting unit 102 to reduce the output voltage, thereby to reach a voltage limitation effect.

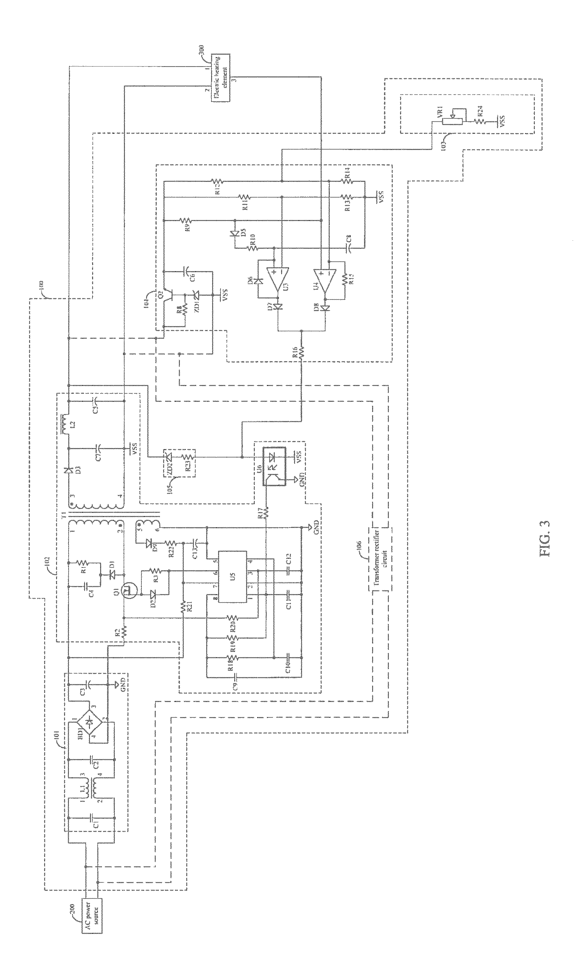

FIG. 3 shows a circuit structure of a low voltage and constant temperature controlling device of an electric blanket in accordance with another embodiment. For describing conveniently, only the parts related to the embodiment of the present invention are shown.

As another embodiment of the present invention, the working parameter setting unit 103 includes a variable resistor VR1 and a resistor R24. A first end of the variable resistor VR1 is an output end of the working parameter setting unit 103. The resistor R24 is connected between a second end of the variable resistor VR1 and the low voltage power source ground VSS. The voltage of the output end of the the working parameter setting unit 103 can be changed by adjusting the resistance value of the variable resistor VR1, thereby to set the work parameters of the temperature controlling unit 104.

In the embodiment, the circuit structures of the high voltage rectifying and filtering unit 101, the power converting unit 102, and the temperature controlling unit 103 are the same as the circuit structure shown in FIG. 2 and will not be described here.

One embodiment of the present invention further provides an electric blanket incorporating the above described low voltage and constant temperature controlling device.

In the embodiments of the present invention, because the high voltage rectifying and filtering unit power 101, the changing unit 102, the working parameter setting unit 103, and the temperature controlling unit 104 are provided in the low voltage and constant temperature controlling device 100, the electric element 300 can be heated by the low voltage DC, and the low voltage and constant temperature controlling device 100 can automatically adjust the output voltage of the power converting unit 102 according to the presetting work parameters of the user and the temperature of the electric element and can make the temperature of the electric element rapidly reach to the presetting temperature value and keep constant, further the low voltage and constant temperature controlling device 100 has multiple safety protection function and simple circuit structure, thereby solving the problems of low temperature constancy, high cost, low safety, and electromagnetic radiation existing in the known technology.

The above described examples are only a few embodiments of the present invention, and the descriptions are detailed, but it should not be understood that they are intended to limit the invention to these embodiments. It should be noted that, to the person skilled in this art, the alternatives, modifications and equivalent to the embodiments may be included within the spirit and scope of the invention.

## Claims

1. A low voltage and constant temperature controlling device of an electric blanket being connected to an external AC power source and an electric heating element, the low voltage and constant temperature controlling device comprising: a high voltage rectifying and filtering unit, a power converting unit, a working parameter setting unit, and a temperature controlling unit;
an AC voltage input end of the high voltage rectifying and filtering unit being connected to the external AC power source and configured for rectifying and filtering high voltage AC of the AC power source and outputting high voltage direct current;
a positive voltage input end and negative voltage input end of the power converting unit respectively connecting with the positive voltage output end and negative voltage output end of the high voltage rectifying and filtering unit, the positive voltage output end and negative voltage output end of the high voltage rectifying and filtering unit respectively connecting with a first end and a second end of the electric element, an control signal input end being connected to a controlling signal outputting end of the temperature controlling unit and configured for converting the high voltage DC to the low voltage DC whose voltage changing with the controlling signal according to the controlling signal outputted from the temperature controlling unit, thereby providing working voltage for the electric element;
an output end of the working parameter setting unit being connected to a controlling end of the temperature controlling unit configured for outputting setting signal for setting working parameters for the temperature controlling unit;
a temperature sensing signal input end of the temperature controlling unit being connected to a third end of the electric heating element, the controlling end of the temperature controlling unit being connected to the output end of working parameter setting unit and configured for generating controlling signals according to a temperature sensing signal outputted from the electric element and the setting signal outputted from the working parameter setting unit.

2. The low voltage and constant temperature controlling device as claimed in claim 1, further comprising a voltage limiting unit, wherein an input end and output end of the voltage limiting unit are respectively connected to a positive voltage output end and a controlling signal input end of the power converting unit and configured for limiting a voltage value of the low voltage DC outputted from the power converting unit within a safe voltage range.

3. The low voltage and constant temperature controlling device as claimed in claim 1, wherein the high voltage rectifying and filtering unit comprises a capacitor C1, a choke coil L1, a capacitor C2, a rectifying bridge BD1, and a filtering capacitor C3;
a first end and second end of the capacitor C1 are AC voltage input end of the high voltage rectifying and filtering unit, a first input end and second input end of the choke coil L1 are respectively connected to the first end and second end of the capacitor C1, the capacitor C2 is connected to the first output end and second output end of choke coil, the first input end and the second input end of the rectifying bridge BD1 are respectively connected to the first output end and second output end of the choke coil L1, the positive pole and negative pole of the filtering capacitor C3 are the positive voltage output end and negative voltage output end of the high voltage rectifying and filtering unit and are respectively connected to the positive voltage output end and negative voltage output end of the rectifying bridge BD1, the negative output end of the rectifying bridge BD1 is a high voltage power source ground.

4. The low voltage and constant temperature controlling device as claimed in claim 1, wherein the power converting unit comprises a capacitor C4, a resistor R1, a diode D1, a resistor R2, a NMOS tube Q1, a diode D2, a resistor R3, a transformer T1, an optocoupler U6, a resistor R17, a resistor R18, a resistor R19, a resistor R20, a capacitor C9, a capacitor C10, a capacitor C11, a capacitor C12, a pulse modulator U5, a resistor R21, an electrolytic capacitor C13, a resistor R22, a diode D9, a diode D3, an electrolytic capacitor C7, an inductor L2, and an electrolytic capacitor C5;
a first end of a primary coil of the transformer T1 is the positive voltage input end of the power converting unit, a first end of the capacitor C4 and the first end of the resistor R1 are connected together to the first end of the primary coil of the transformer T1, the second end of the capacitor C4 and the second end of the resistor R2 are connected together to the cathode of the diode D1, the anode of the diode D1 and second end of the primary coil of the transformer T1 are connected together to a drain electrode of the NMOS tube Q1, the source electrode of the NMOS tube Q1 is connected to the first end of the resistor R2, a second end of the resistor R2 is a positive voltage input end of the power converting unit, the grid electrode of the NMOS tube Q1 is connected to an anode of the diode D2, the resistor R3 is connected between the cathode and anode of the diode D2, the cathode of the diode D2 is connected to an output pin of the pulse modulator U5, the resistor R18 is connected between a RT/CT pin and a reference voltage output pin, the resistor R19 is connected between a compensating pin of the pulse modulator U5 and a reference voltage output pin, the resistor R20 is connected between the source electrode of the NMOS tube Q1 and a current sampling pin of the pulse modulator U5, a first end of the capacitor C9, a first end of the C10, a first end of the capacitor C10, and a first end of the capacitor C12 are respectively connected to the reference voltage output pin, Rt/CT pin, compensating pin, and current sampling pin of the pulse modulator U5, a second end of the capacitor C9, a second end of the C10, a second end of the capacitor C10, and a second end of the capacitor C12 are connected together to the high voltage power source ground, a first end of the resistor R21 is connected to a positive voltage output end of the high voltage rectifying and filtering unit, a second end of the resistor R21 is connected to the power source pin of pulse modulator U5, a first end of the resistor R22, and a positive pole of the electrolytic capacitor C13, the second end of the resistor R22 is connected to a cathode of the diode D9, an anode of the diode D9 is connected to a first end of a secondary coil of the transformer T1, a second end of a secondary coil of the transformer T1, a ground pin of the pulse modulator U5, and cathode of the electrolytic capacitor C 12 are connected together to the high voltage power source ground, an anode of the diode D3 and a positive pole of the electrolytic capacitor are respectively connected to the first and second end of the secondary coil of the transformer T1, a cathode of the diode D3 and the negative pole of the electrolytic capacitor C7 are connected together to a first end of the inductor L2, a second end of the inductor L2 is the positive voltage output end of the power converting unit and is connected to a positive pole of the electrolytic capacitor C5, the negative pole of the electrolytic capacitor C5 is the negative voltage output end of the power converting unit and is connected to the negative pole of the electrolytic capacitor C7, the negative voltage output end of the power converting unit is a low voltage power source ground, an anode of a light-emitting diode in the optocoupler U6 is a controlling signal input end of the power converting unit, a cathode of a light-emitting diode in the optocoupler U6 is connected to the low voltage power source ground, a collector electrode of a light activated triode in the optocoupler U6 is connected to the first end of the resistor R17, a second end of the resistor R17 is connected to a compensating pin of the pulse modulator U5, an emitter electrode of the light active triode in optocoupler U6 is connected to the high voltage power source ground.

5. The low voltage and constant temperature controlling device as claimed in claim 1, wherein the working parameter setting unit comprises a microcontroller U1, a first key, a second key, a third key, a resistor R4, a resistor R5, a resistor R6, a resistor R7, and a display U2;
a first universal input and output port, a second universal input and output port, and a third universal input and output port of the microcontroller U1 are respectively connected to a first end of the first key, a first end of the second key, and a first end of the third key, a second end of the first key, a second end of the second key, and a second end of the third key are connected together to the power source ground, a first end of the resistor R4, a first end of the resistor R5, a first end of the resistor R6, and a first end of the resistor R7 are respectively connected to a fourth universal input and output port, a fifth universal input and output port, a sixth universal input and output port, and a seventh universal input and output port of the microcontroller U1, and a second end of the resistor R6 and a second end of the resistor R7 are connected together to form an output end of the working parameter setting unit, the display U2 connects with the microcontroller U1.

6. The low voltage and constant temperature controlling device as claimed in claim 1, wherein the working parameter setting unit comprises a variable resistor VR1 and a resistor R24, a first end of the variable resistor VR1 is an output end of the working parameter setting unit, the resistor R24 is connected between a second end of the variable resistor VR1 and the low voltage power source ground.

7. The low voltage and constant temperature controlling device as claimed in claim 1, wherein the temperature controlling unit comprises an NPN type triode Q2, a resistor R8, a zener diode ZD1, an electrolytic capacitor C6, a resistor R9, a diode D5, a resistor R10, a resistor R11, a resistor R12, a resistor R13, a resistor R14, an electrolytic capacitor C8, a diode D6, an operational amplifier U3, a diode D7, an operational amplifier U4, a diode D8, a resistor R15, and a resistor R16;
a collector electrode of the NPN type triode Q2 is the positive power source end of the temperature controlling unit, the resistor R8 is connected between the collector electrode and a base electrode of the NPN type triode Q2, a cathode of the zener diode ZD1 is connected to the base electrode of the NPN type triode Q2, an anode of the zener diode ZD1 is the negative power source end of the temperature controlling unit and is connected to the low voltage power source ground, the positive pole and negative pole of the electrolytic capacitor C6 are respectively connected to an emitter electrode of the NPN type triode Q2 and the low voltage power source ground, a first end of the resistor R9 is connected to the positive pole of the electrolytic capacitor C6, a positive pole of the diode D5 is connected to a second end of the resistor R9 and a noninverting input end of the operational amplifier U4, the noninverting input end of the operational amplifier U4 is the temperature sensing signal input end of the temperature controlling unit, a cathode of the diode D5 is connected to a first end of the resistor R10, a second end of the resistor R10 is connected to the noninverting input end of the operational amplifier U3 and a positive pole of the electrolytic capacitor C8, a negative pole of the electrolytic capacitor C8 is connected to the low voltage power source ground, a first end of the resistor R 11 and a first end of the resistor R12 are connected together to the first end of the resistor R9, a second end of the resistor R11 and a first end of the resistor R13 are connected together to an inverting input end of the operational amplifier U3, a second end of the resistor R12 is a controlling end of the temperature controlling unit and is connected to the inverting input end of the operational amplifier U4 and a first end of the resistor R14, a second end of the resistor R13 and a second end of the resistor R13 are connected together to the low voltage power source ground, a cathode of the diode is connected to the noninverting input end of the operational amplifier U3, an output end of the operational amplifier U3 and the anode of the diode D6 are connected together to an anode of the diode D7, the resistor R15 is connected between the inverting input end and output end of the operational amplifier U4, the anode of the diode D8 is connected to the output end of the operational amplifier U4, a cathode of the diode D7 and a cathode of the diode D8 are connected together to a first end of the resistor R16, a second end of the resistor R16 is a controlling signal outputting end of the temperature controlling unit.

8. The low voltage and constant temperature controlling device as claimed in claim 1, wherein the voltage limiting unit comprises a zener diode ZD2 and a resistor R23, a cathode of the zener diode ZD2 is an input end of the voltage limiting unit, an anode of the zener diode ZD2 is connected to a first end of the resistor R23, a second end of the resistor R23 is the output end of the voltage limiting unit and is connected to a control signal input end of the power converting unit.

9. A blanket, comprising any one of the low voltage and constant temperature controlling device claimed in claims 1-8.
